# EUROPÄISCHE PATENTANMELDUNG

(11) **EP 1 317 040 A1**
(43) Veröffentlichungstag der Anmeldung: **04.06.2003**
(21) Anmeldenummer: 02023359.9
(22) Anmeldetag: 18.10.2002
(51) Int. Cl.: H02G 3/04

(54) **Kabelkanal**

(30) Priorität: 28.11.2001 DE 10158166
(71) Anmelder: Dirk A. Brügmann Kunststoff-Verarbeitung GmbH & Co. KG, 58093 Hagen (DE)
(72) Erfinder: Mandelartz, Michael, 58239 Schwerte (DE)
(74) Vertreter: Becker, Thomas, Dr., Dipl.-Ing.

(57) **Zusammenfassung**

Die Erfindung betrifft einen Kabelkanal.

## Beschreibung

Die Erfindung betrifft einen Kabelkanal.

Kabelkanäle dienen zur Aufnahme und Führung von Kabeln.

Die Kabelkanäle weisen zur Aufnahme der Kabel üblicherweise ein kanalartiges Aufnahmeelement auf, in das die Kabel eingelegt werden können. Das Aufnahmeelement weist in der Regel eine Abdeckung mit einem Schlitz auf, der sich in Längsrichtung des Aufnahmeelementes erstreckt. Die Abdeckung besteht dabei aus einem flexiblen Material, so dass die Kabel durch den Schlitz in das Aufnahmeelement gedrückt werden können, wobei die Abdeckung nachgibt.

Das Problem bei diesen Kabelkanälen liegt insbesondere darin, dass die bereits im Aufnahmeelement befindlichen Kabel das Hereindrücken weiterer Kabel behindern, da die Abdeckung beim Hereindrücken weiterer Kabel gegen die bereits im Aufnahmeelement befindlichen Kabel drückt. Auch ist ein solches Aufnahmeelement nur schwer zugänglich, so dass die Kabel relativ ungeordnet im Aufnahmeelement liegen, somit relativ viel Platz benötigen und entsprechend weniger Kabel im Aufnahmeelement angeordnet werden können.

Es sind auch Kabelkanäle bekannt, die in Modulbauweise aus mehreren Komponenten zusammensteckt werden können. Solche Kabelkanäle sind jedoch kompliziert aufgebaut und daher aufwending in der Herstellung.

Der Erfindung liegt die Aufgabe zugrunde, einen Kabelkanal zur Verfügung zu stellen, der einfach aufgebaut ist und mit dem Kabel in einem leicht zugänglichen Element zur Aufnahme der Kabel sicher geführt werden können.

Zur Lösung der Aufgabe sieht die Erfindung einen Kabelkanal mit den folgenden Merkmalen vor:
einem Kanalteil;
einer Kanalabdeckung;
die Kanalabdeckung ist an einem endseitigen Abschnitt an zwei beabstandeten Lagern schwenkbar gelagert;
der sich zwischen den Lagern erstreckende Abschnitt der Kanalabdeckung ist durch ein Gelenk in zwei Teilabschnitte unterteilt;
die Summe der Teillängen der beiden Teilabschnitte ist größer als der Abstand der Schwenkachsen der beiden Lager voneinander.

Der Kanalteil ist der Teil des Kabelkanals, der zur Aufnahme der Kabel dient.

Seine Form und Gestaltung ist grundsätzlich beliebig. Er kann beispielsweise einen im wesentlichen rechteckigen, nutförmigen oder kreisabschnittsartigen Querschnitt haben.

Bei einem im wesentlichen rechteckigen Querschnitt kann der Kanalteil zum Beispiel mit einem im wesentlichen ebenen Bodenteil und sich senkreckt von diesem Bodenteil erstreckenden Seitenwänden, die im wesentlichen parallel und beabstandet zueinander verlaufen, gebildet sein.

Es kann vorgesehen sein, dass das vom Bodenteil abgewandte Ende der Seitenwände einen der jeweils benachbarten Seitenwand zugewandten Vorsprung aufweist. Durch diese Vorsprünge kann ein ungewolltes Herausrutschen der Kabel aus dem Kanalteil behindert werden.

Der Kanalteil kann "massive" Außwandungen haben. Es kann jedoch aus ausreichend sein, wenn die Außenwandungen teilweise durchbrochen sind. Dadurch kann Material gespart und die Flexibilität des Kanalteils erhöht werden.

Es kann vorgesehen sein, dass der Kanalteil Elemente zur Halterung der Kabel enthält wie beispielsweise Klemmen oder Wülste, die gegen die Kabel drücken.

Der Kanalteil weist eine Öffnung auf, durch die Kabel in den Kanalteil eingelegt werden können. Diese Öffnung kann sich im wesentlichen in der Längsachse des Verlaufs des Kanalteils erstrecken, so dass die Öffnung quasi parallel zur Längsrichtung der einzulegenden Kabel verläuft.

Um die Öffnung des Kanalteils verschließen zu können, weist der anmeldungsgemäße Kabelkanal eine Kanalabdeckung auf.
Die Kanalabdeckung ist so gestaltet, dass sie an ihrer dem Kanalteil zugewandten Seite auf die Öffnung des Kanalteils auflegbar ist und die Öffnung des Kanalteils somit teilweise oder vollständig von der Kanalabdeckung verschlossen werden kann (nachfolgend "Verschlußstellung" der Kanalabdeckung genannt).

Es können an einem Kabelkanal auch mehrere Kanalabdeckungen zum Verschließen der Öffnung des Kanalteils vorgesehen sein.

Kanalteil und Kanalabdeckung können derart gestaltet sein, dass die in der Verschlußstellung einander zugewandten Flächen von Kanalteil und Kanalabdeckung miteinander korrespondieren. Beispielsweise können die einander zugewandten Flächen von Kanalteil und Kanalabdeckung in der Verschlußstellung im wesentlichen in einer Ebene angeordnet sein. So können die oberen Enden der seitlichen Wandungen des Kanalteils beispielsweise in einer Ebene angeordnet sein, so dass die Öffnung des Kanalteils durch eine ebene Fläche der Kanalabdeckung verschlossen werden kann.

Die Gestaltung der Kanalabdeckung ist grundsätzlich beliebig. Sie kann beispielsweise im wesentlichen flächig ausgebildet sein und zum beispiel, wie zuvor ausgeführt, eine in der Verschlußstellung dem Kanalteil zugewandte, ebene Fläche aufweisen.

Die Kanalabdeckung ist nicht "lose", sondern an einem endseitigen Abschnitt an zwei beabstandeten Lagern schwenkbar gelagert.

Die Gestaltung der Lager ist grundsätzlich beliebig. Es können alle nach dem Stand der Technik bekannten Lager Verwendung finden, an denen ein Element schwenkbar gelagert werden kann. Die Achse, um die die Kanalabdeckung um jedes der beiden Lager schwenkbar ist, wird jeweils als "Schwenkachse" bezeichnet.

Nach einer Ausführungsform kann wenigstens eines der beiden Lager durch eine Zone mit einer Materialschwächung gegenüber benachbarten Abschnitten gebildet sein. Entsprechende Lager können zum Beispiel nach Art eines sogenannten Filmscharnieres ausgebildet sein.

Die Schwenkachsen der beiden Lager verlaufen im wesentlichen jeweils linear (achsial) und parallel zueinander.

Die Achsen der Lager können im wesentlichen parallel zur Längsachse des Kanalteils (also der Achse des Kanalteils, entlang derer sich in das Kanalteil eingelegte Kabel im wesentlichen erstrecken) verlaufen.

Wenigstens eines der Lager kann zum Beispiel an einem Abschnitt des Kabelkanals angeordnet sein, der materialschlüssig mit dem Kanalteil verbunden ist. Der Abschnitt kann jedoch selbstverständlich beliebig mit dem Kabelkanal in Verbindung stehen, also beispielsweise auf diesen aufgesteckt sein.

Nach einer Ausführungsform ist vorgesehen, dass der Kabelkanal eine im wesentlichen flächige Grundplatte aufweist. Von dieser Grundplatte erheben sich mindestens zwei Seitenwände, so dass durch den Raum zwischen diesen Seitenwänden und der Grundplatte der Kanalteil gebildet wird.

Ein Lager kann beispielsweise an einer der äußeren Seitenwände angeordnet sein. Dieses Lager kann zum Beispiel nach Art eines Filmscharnieres ausgebildet sein; in diesem Fall besteht das Lager also aus einer Zone, die materialschwächer ist als zum einen der der Zone benachbarte Abschnitt dieser äußeren Seitenwand, an dem die Kanalabdeckung gelagert ist und zum anderen als die der Zone benachbarten Abschnitte der Kanalabdeckung selbst.

Parallel und beabstandet zu dieser Lagerung an der äußeren Seitenwand ist die Kanalabdeckung an einem zweiten Lager, dessen Schwenkachse linear und parallel zur Schwenkachse des an der äußeren Seitenwände angeordneten Lagers verläuft, gelagert. Dieses zweite Lager kann beispielsweise ebenfalls auf der Grundplatte angeordnet sein, beispielsweise auf einem wulst- oder wandartigen Vorsprung. Auch hier kann beispielsweise ein Filmscharnier als Lager vorgesehen sein.

Der sich zwischen den Lagern erstreckende Abschnitt der Kanalabdeckung ist durch ein Gelenk in zwei Teilabschnitte unterteilt.

Das Gelenk ist derart ausgebildet, dass es eine Bewegung der beiden Teilabschnitte gegeneinander um eine Achse gestattet, die parallel zu den beiden Schwenkachsen der Lager verläuft. Mit anderen Worten: Die Kanalabdeckung besitzt zwischen den beiden Lagern einen "Knick", der parallel zu den Schwenkachsen der beiden Lager verläuft und um den die beiden Teilabschnitte der Kanalabdeckung gegeneinander bewegbar sind; dieser "Knick" wird von einem Gelenk gebildet.

An den Teilabschnitt der Kanalabdeckung, der sich vom Gelenk bis zu dem, dem Kanalteil näheren Lager hin erstreckt, schließt sich ein Abschnitt der Kanalabdeckung an, durch den die Öffnung des Kanalteils verschließbar ist (Abdeckabschnitt). Der Abdeckabschnitt kann materialschlüssig mit dem Teilabschnitt, an den er sich anschließt, verbunden sein und beispielsweise aus dem gleichen Material wie der betreffende Teilabschnitt bestehen. Im einfachsten Fall gehen Teilabschnitt und Abdeckabschnitt "fließend" ineinander über, beispielsweise in Form eines durchgehend flächigen Elements.

Die Summe der Teillängen der beiden Teilabschnitte ist größer als der Abstand der Schwenkachsen der beiden Lager voneinander.

Unter einer "Teillänge" eines Teilabschnitts wird anmeldungsgemäß der Abstand von der Achse des Lagers, an dem der betreffende Teilabschnitt gelagert ist, bis zur Gelenkachse verstanden.

Da die Summe der Teillängen der beiden Teilabschnitte größer ist als der Abstand der beiden Schwenkachsen der Lager voneinander, sind die beiden Teilabschnitte (in entspannter Stellung) stets entlang des Gelenkes gewinkelt zueinander.

Es ergeben sich zwei Stellungen, in denen die beiden Teilabschnitte in entspannter Stellung gewinkelt zueinander angeordnet sind. Diese beiden Stellungen werden nachfolgend als "Ruhestellungen" bezeichnet. Die Ruhestellungen liegen genau dann vor, wenn die Gelenkachse durch einen der beiden Schnittpunkte zweier Kreise geht, die entstehen, wenn man um die beiden Lager jeweils einen Kreis mit dem Radius der Teillänge des an dem jeweiligen Lager gelagerten Teilabschnittes zieht.

In allen anderen Positionen außer den beiden vorgenannten Ruhestellungen stehen die Teilabschnitte unter Spannung. Solange die Teilabschnitte unter Spannung stehen, bewegen sie sich selbsttätig in eine der beiden Ruhestellungen.

Um die Teilabschnitte von einer Ruhestellung in die andere Ruhestellung zu bringen, muß eine Kraft auf die Teilabschnitte in Richtung auf die jeweils andere Ruhestellung aufgebracht werden.

Um eine solche Überführung der Teilabschnitt von einer Ruhestellung in die andere Ruhestellung zu ermöglichen, müssen entweder der Abstand der Schwenkachsen der Lager und/oder die Teillängen der Teilabschnitte veränderbar sein.

Nach einer Ausführungsform ist vorgesehen, dass dazu einer oder beide der Teilabschnitte flexibel ausgebildet sind. So können beispielsweise einer oder beide der Teilabschnitte aus einem flexiblen Material, beispielsweise einem Kunststoff, ausgebildet sein.

Kumulativ oder alternativ können eines oder beide der Lager an einem flexiblen Element am Kabelkanal angeordnet sein. Beispielsweise können die Lager, wie oben ausgeführt, an einem wulst- oder wandartigen Vorsprung angeordnet sein, der aus einem flexiblen Material, wie beispielsweise Kunststoff besteht. Soweit ein Lager an der äußeren Seitenwand des Kanalteils angeordnet ist, kann beispielsweise diese äußere Seitenwand flexibel sein und zum Beispiel aus einem flexiblen Material, wie beispielsweise Kunststoff, bestehen.

Bei einer Ausführungsform eines Kabelkanals mit Grundplatte, wie oben ausgeführt, kann auch die Grundplatte selbst, zumindest in dem Bereich, in dem an ihr die Lager angeordnet sind, flexibel sein und beispielsweise aus Kunststoff bestehen.

Indem in einer Ruhestellung der Teilabschnitte eine Kraft auf die Teilabschnitte in Richtung auf die andere Ruhestellung aufgebracht wird, werden die, wie zuvor ausgeführt, flexiblen Abschnitte "verbogen" und stehen damit unter Spannung. Da allein die beiden Ruhestellungen spannungsfrei sind, bleiben die Teilabschnitte "automatisch" in einer dieser beiden Ruhestellungen stehen, sobald sie erreicht ist.

Der Abdeckabschnitt der Kanalabdeckung ist derart an dem Teilabschnitt, der sich vom Gelenk bis zu dem, dem Kanalteil näheren Lager hin erstreckt, angeordent, dass er in der einen Ruhestellung in einer Stellung ist, in der er die Öffnung des Kanalteils verschließt (Verschlußstellung) und in der zweiten Ruhestellung in einer Stellung ist, in der er die Öffnung nicht verschließt (geöffnete Stellung). In der geöffneten Stellung des Abdeckabschnitts ist der Kanalteil zugänglich, so dass Kabel in den Kanalteil eingelegt werden können.

Kanalteil und Kanalabdeckung können aus dem gleichen Material bestehen, beispielsweise einem Kunststoff wie zum Beispiels Polyethylen oder Polypropylen.

Ein Vorzug des anmeldungsgemäßen Kabelkanals liegt darin, dass der gesamte Kabelkanal als ein Spritzgußteil hergestellt sein kann. Sämtliche Elemente des Kabelkanals sind somit materialschlüssig miteinander verbunden und bestehen aus dem gleichen Material, wie beispielsweise einem Kunststoff wie zum Beispiel Polyethylen oder Polyprolpylen.

Der Kabelkanal kann auch als Extrusionsteil hergestellt sein. Dabei kann der gesamte Kabelkanal beispielsweise aus dem gleichen Material bestehen. Alternativ kann beispielsweise vorgesehen sein, dass als Filmscharniere ausgebildete Gelenke aus einem weicheren Material (zum Beispiel Weich-Polyvinylchlorid oder Polyurethan) als die übrigen Komponenten des Kabelkanals bestehen (diese können zum Beispiel aus Hart-Polyvinylchlorid bestehen).

Der Kabelkanal kann ein Verbindungselement aufweisen, über das er mit einem weiteren Kabelkanal verbindbar ist. Dazu kann der Kabelkanal beispielsweise ein hervorstehendes Element aufweisen, das in eine korrespondierende Öffnung eines weiteren Kabelkanals einsteckbar ist. Indem jeder Kabelkanal sowohl ein hervorstehendes Element als auch eine Öffnung aufweist, können beliebig viele Kabelkanäle miteinander verbunden werden.

Nach einer Ausführungsform ist ein hervorstehendes Element in Form einer zylinderartigen Erhebung mit einem ringartig umlaufenden Vorsprung an seinem oberen Rand vorgesehen. Dieses Element kann senkrecht abstehend von der Grundplatte auf dieser vorgesehen sein. Das Element kann in eine ringartige Öffnung eines aus einem weiteren Kabelkanal hervorstehenden Steges einrasten. Die Öffnung an dem Steg kann derart vorgesehen sein, dass das Element in der Öffnung von einer Raststellung in eine andere Raststellung verschiebbar ist. Dadurch kann ein unterschiedlicher Abstand der beiden miteinander verbundenen Kabelkanäle gewählt werden. Eine solche Ausführungsform wird in der nachfolgenden Figurenbeschreibung beispielhaft erläutert.

Weitere Merkmale der Erfindung ergeben sich aus den Unteransprüchen, den Figuren sowie den sonstigen Anmeldungsunterlagen.

Die vorgenannten Merkmale, die ein anmeldungsgemäßer Kabelkanal aufweisen kann, können beliebig miteinander kombiniert werden und sind nicht auf die vorgenannten sowie die nachfolgend in der Figurenbeschreibung erläuterten Ausführungsbeispiels beschränkt.

Die Erfindung wird nachstehend anhand eines Ausführungsbeispiels näher erläutert.

Dabei zeigt, jeweils in schematisierter Darstellung,
- Fig. 1: einen Kabelkanal in seitlicher Ansicht, wobei die Kanalabdeckung in geöffneter Stellung ist,
- Fig. 2: den Kabelkanal nach Fig. 1, wobei die Kanalabdeckung in Verschlußstellung ist,
- Fig. 3: einen Ausschnitt der Darstellung nach Fig. 1 im Bereich der Lager,
- Fig. 4: mehrere miteinander verbundene Kabelkanäle nach Fig. 2 in Aufsicht und
- Fig. 5: eine seitliche Ansicht mehrerer miteinander verbundener Kabelkanäle nach Fig. 2.

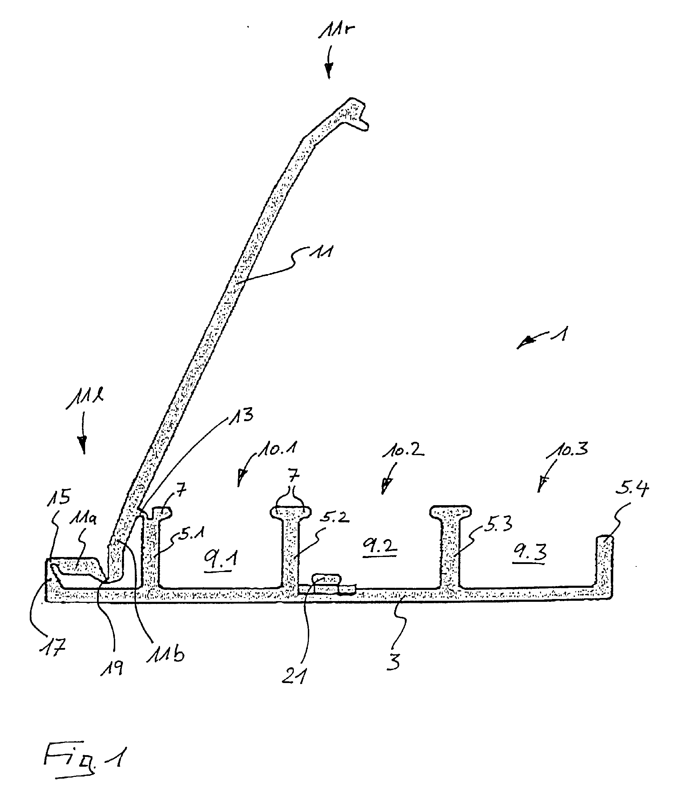

Fig. 1 zeigt einen Kabelkanal 1. Der gesamte Kabelkanal 1 ist als ein einziges Spritzgußteil aus Polypropylen hergestellt.

Auf einer rechteckigen Grundplatte 3, die sich senkrecht zur Zeichenebene erstreckt und deren Längsseite parallel zur Zeichenebene verläuft, sind vier Seitenwände 5.1, 5.2, 5.3, 5.4 senkrecht zur Grundplatte 3 angeordnet. Die Seitenwände 5.1, 5.2, 5.3, 5.4 sind im wesentlichen rechteckig und erstrecken sich parallel zu den Schmalseiten der Grundplatte 3. Die linke Seitenwand 5.1 ist beabstandet zur linken Schmalseite der Grundplatte 3 angeordnet und weist an ihrem oberen Ende einen Vorsprung 7 auf, der der rechts neben der Seitenwand 5.1 angeordneten Seitenwand 5.2 zugewandt ist. Die Seitenwand 5.2 und die rechts daneben angeordnete Seitenwand 5.3 weisen an ihrem oberen Ende beidseitig abstehende Vorsprünge 7 auf. Die rechts neben der Seitenwand 5.3 angeordnete Seitenwand 5.4 weist keine Vorsprünge auf. Sie verläuft auf der rechten Schmalseite der Grundplatte 3.

Durch den Raum zwischen den Seitenwänden 5.1, 5.2, 5.3, 5.4 und der Grundplatte 3 werden drei Kanalteile 9.1, 9.2, 9.3 definiert. In diese können über die Öffnungen 10.1, 10.2, 10.3 der Kanalteile 9.1, 9.2, 9.3 Kabel (nicht dargestellt) mit ihrer Längsachse senkrecht zur Zeichenebene eingelegt werden.

Die Kanalabdeckung 11 des Kabelkanals 1 ist an ihrem linken endseitigen Abschnitt 111 an zwei Lagern 13, 15 schwenkbar gelagert.

Die Kanalabdeckung 11 ist im wesentlichen flächig ausgebildet. An ihrem rechten endseitigen Abschnitt 11r weist die Kanalabdeckung 11 einen mit der rechten Seitenwand 5.4 korrespondierenden Abschnitt auf.

Das Lager 13 ist als Filmscharnier zwischen dem linken oberen Rand der linken äußeren Seitenwand 5.1 und der Kanalabdeckung 11 ausgebildet.

Das Lager 15 ist ebenfalls als Filmscharnier ausgebildet. Es ist zwischen dem oberen Rand einer wulstartigen Erhebung 17, die auf der linken Schmalseite der Grundplatte 3 verläuft, und dem linken Ende der Kanalabdeckung 11 angeordnet.

Die Schwenkachsen der Lager 13, 15 verlaufen jeweils senkrecht zur Zeichenebene.

Der sich zwischen den Lagern 13, 15 erstreckende Abschnitt der Kanalabdeckung 11 ist durch ein Gelenk 19 in zwei Teilabschnitte 11a, 11b unterteilt.

Das Gelenk 19 ist als Filmscharnier ausgebildet, dessen Achse senkrecht zur Zeichenebene verläuft.

Der Teilabschnitt 11a verläuft vom Lager 15 bis zum Gelenk 19. Der Teilabschnitt 11b verläuft vom Gelenk 19 zum Lager 13.

Deutlich zu erkennen ist, dass die Summe der Teillängen der beiden Teilabschnitte 11a, 11b größer als der Abstand der Schwenkachsen der beiden Lager 13, 15 ist.

Die beiden Teilabschnitte 11a, 11b befinden sich in Fig. 1 in einer der beiden Ruhestellungen. Der sich an den Teilabschnitt 11b rechts anschließende Abschnitt der Kanalabdeckung (Abdeckabschnitt) 11 befindet sich in geöffneter Stellung. Die drei Kanalteile 9.1, 9.2, 9.3 sind frei zugänglich.

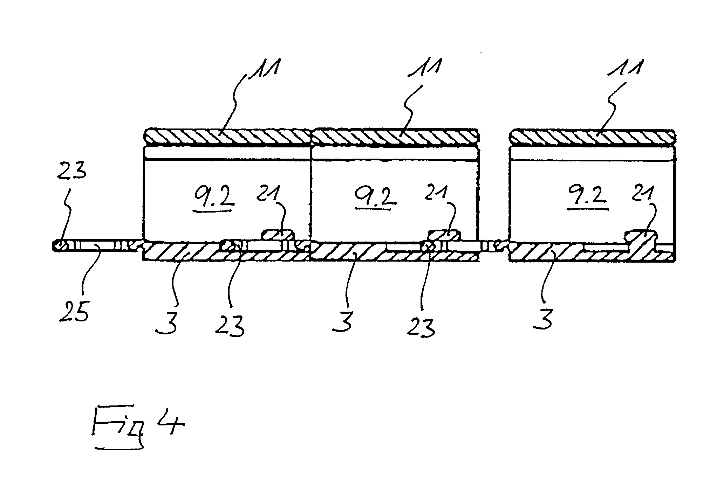

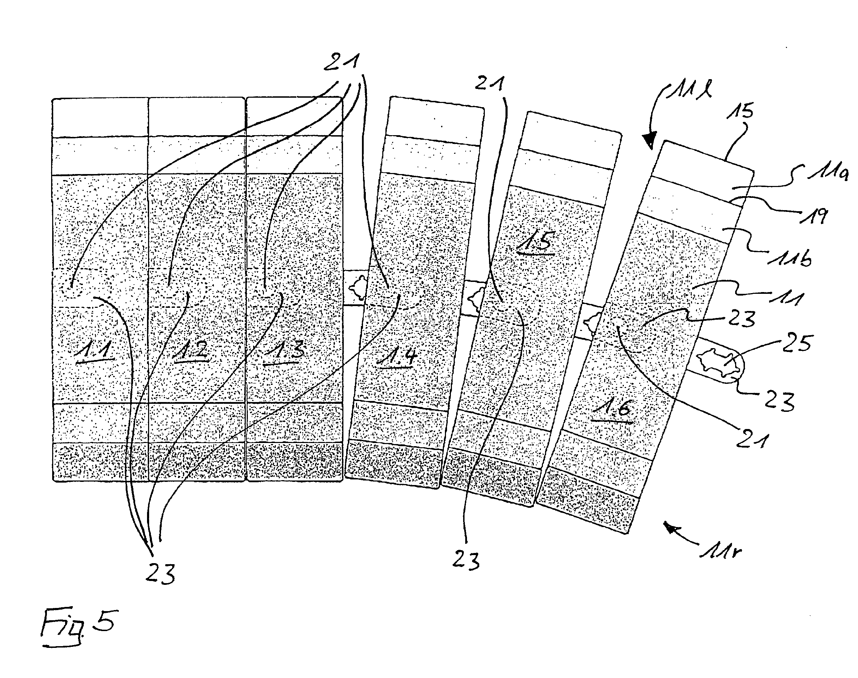

In der Grundplatte 3 weist der Kabelkanal 1 eine Vertiefung auf, aus der sich ein zylinderartiges Element 21 mit einem an seinem oberen Rand ringartig umlaufenden Vorsprung erhebt. Dieses Element 21 ist in eine korrespondierende Öffnung in einem Steg eines weiteren Kabelkanals (siehe Fig. 4, 5) einrastbar. Da das Element 21 in einer Vertiefung der Grundplatte 3 angeordnet ist, kann der Steg in der Vertiefung versenkt werden, so dass die Oberfläche des Steges mit der Oberfläche der Grundplatte 3 bündig abschließen kann und die Anordnung der Kabel nicht behindert.

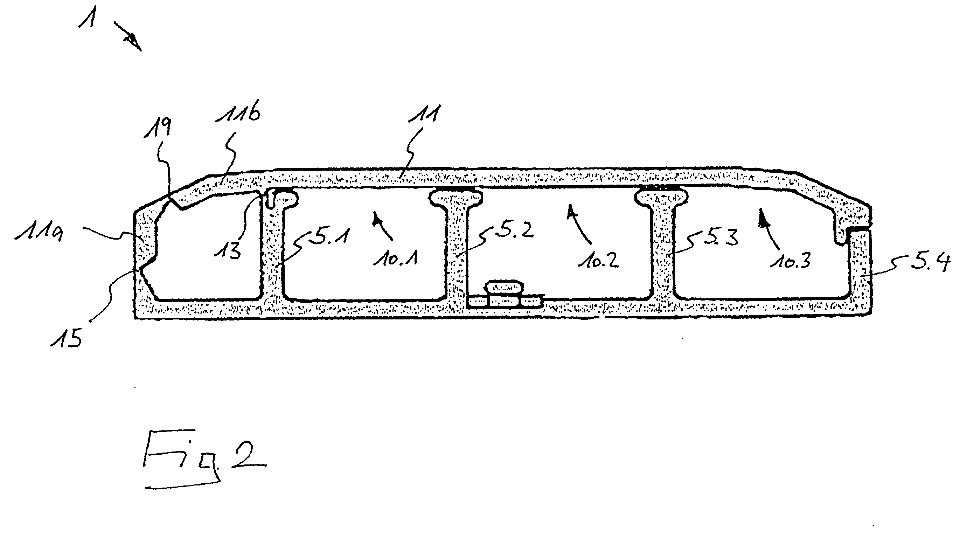

Fig. 2 zeigt den Kabelkanal nach Fig. 1, wobei sich die beiden Teilabschnitte 11a, 11b in der zweiten der beiden Ruhestellungen befinden. Der sich an den Teilabschnitt 11b anschließende Abschnitt der Kanalabdeckung 11 befindet sich in Verschlußstellung. Die drei Öffnungen 10.1, 10.2, 10.3 der drei Kanalteile 9.1, 9.2, 9.3 sind durch die Kanalabdeckung 11 verschlossen. Dabei kommt die Kanalabdeckung mit ihrer Unterseite jeweils auf den oberen Enden der Seitenwände 5.1, 5.2, 5.3, 5.4 zu liegen.

Um die Kanalabdeckung 11 von der geöffneten Position (Fig. 1) in die Verschlußposition (Fig. 2) zu bringen, kann die Kanalabdeckung 11 an ihrem Abdeckabschnitt heruntergedrückt werden. Die Kanalabdeckung 11 wirkt dabei als Hebel, die die Teilabschnitte 11a, 11b aus ihrer Ruhestellung bewegt. Die bei der Bewegung auf die Teilabschnitte 11a, 11b ausgeübte Kraft führt zu einer Verbiegung der Teilabschnitte 11a, 11b sowie zu einer leichten Aufweitung des Abstandes zwischen den Lagern 13, 15, die aufgrund der Flexibilität und Elastizität des aus Polypropylen gespritzten Kabelkanals jedoch vom Kabelkanal aufgenommen werden können. Während der Verbiegung der Teilabschnitte 11a, 11b sowie der Aufweitung des Abstandes zwischen den Lagern 13, 15 stehen die Teilabschnitte 11a, 11b unter Spannung. Die Kanalabdeckung 11 schnappt schließlich in ihre Verschlußstellung (Fig. 1) ein, in der sich die Teilabschnitte 11a, 11b in ihrer zweiten Ruhestelung und damit nicht mehr unter Spannung befinden.

Um die Kanalabdeckung 11 von der Verschlußstellung (Fig. 2) in die geöffneten Stellung (Fig. 1) zu bringen, kann auf die Kanalabdeckung 11 in ihrem Bereich des Gelenkes 19 gedrückt werden, bis sie schließlich in der Verschlußstellung einschnappt.

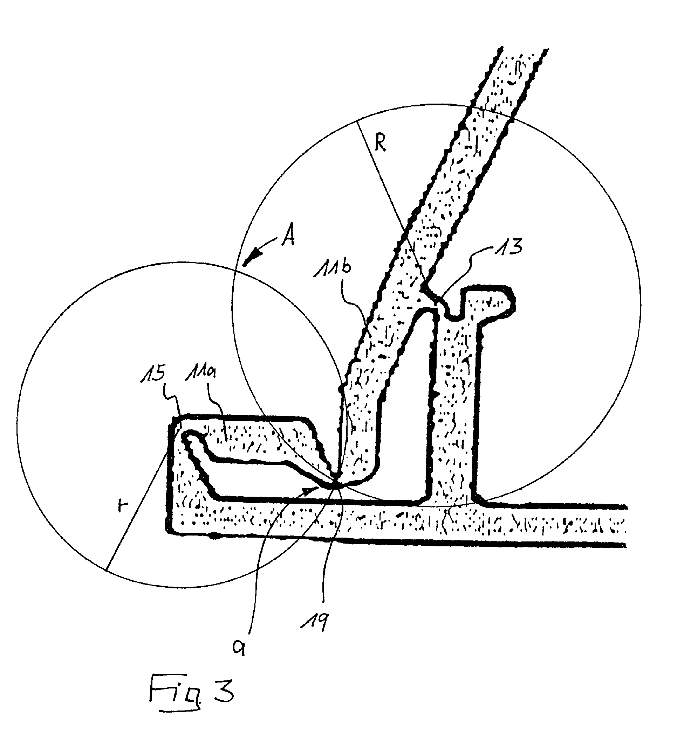

Fig. 3 zeigt einen Ausschnitt der Darstellung nach Fig. 1 im Bereich der Lager 13, 15. Um die Schwenkachse des Lagers 15 ist ein Kreis mit dem Radius r gezogen, wobei der Radius r der Teillänge des Teilabschnitts 11a entspricht. Um die Schwenkachse des Lagers 13 ist ein Kreis mit dem Radius R gezogen, wobei der Radius R der Teillänge des Teilabschnitts 11b entspricht. Die Kreise schneiden sich in den zwei Punkten a, A. Eine Ruhestellung ist erreicht, wenn die Achse des Gelenks 19 durch einen der beiden Punkte a, A geht. In den Fig. 1, 3 geht die Achse des Gelenks 19 durch den Punkt a. In Fig. 2 geht die Achse des Gelenks 19 durch den Punkt A.

In Fig. 4 werden sechs miteinander verbundene Kabelkanäle 1.1, 1.2, 1.3, 1.4, 1.5, 1.6, jeweils mit einer Kanalabdeckung 11 in Verschlußstellung, gezeigt. Ein an der Grundplatte 3 eines jeden Kabelkanals 1 angeordneter und über diese herausragender Steg 23 ist mit dem Element 21 eines benachbarten Kabelkanals 1 verbunden. Die Stege 23 weisen eine längliche Öffnung 25 auf, in denen ein Element 21 in zwei Positionen einrastbar ist. In der ersten Position sind zwei benachbarte Kabelkanäle unmittelbar aneinander anstoßend miteinander verbindbar. In dieser Position ist der Kabelkanal 1.2 mit dem Kabelkanal 1.1 und der Kabelkanal 1.3 mit dem Kabelkanal 1.2 verbunden. In der zweiten Position sind zwei benachbarte Kabelkanäle mit Abstand zueinander verbindbar, so dass sie gegeneinander verschwenkbar sind. In dieser Position ist der Kabelkanal 1.4 mit dem Kabelkanal 1.3, der Kabelkanal 1.5 mit dem Kabelkanal 1.4 und der Kabelkanal 1.6 mit dem Kabelkanal 1.5 verbunden.

Fig. 5 zeigt einen Schnitt durch drei Kabelkanäle, jeweils gemäß Fig. 2, wobei sich die Schmalseite der Grundplatte 3 parallel zur Zeichenebene erstreckt. Der linke Kabelkanal ist mit dem mittleren Kabelkanal unmittelbar aneinander anstoßend verbunden. Der rechte Kabelkanal ist mit dem mittleren Kabelkanal mit Abstand verbunden.

## Patentansprüche

1. Kabelkanal mit folgenden Merkmalen:
a) einem Kanalteil;
b) einer Kanalabdeckung;
c) die Kanalabdeckung ist an einem endseitigen Abschnitt an zwei beabstandeten Lagern schwenkbar gelagert;
d) der sich zwischen den Lagern erstreckende Abschnitt der Kanalabdeckung ist durch ein Gelenk in zwei Teilabschnitte unterteilt;
e) die Summe der Teillängen der beiden Teilabschnitte ist größer als der Abstand der Schwenkachsen der beiden Lager voneinander.

2. Kabelkanal nach Anspruch 1, bei dem Kanalteil und Kanalabdeckung materialschlüssig miteinander verbunden sind.

3. Kabelkanal nach Anspruch 1, bei dem Kanalteil und Kanalabdeckung aus dem gleichen Material bestehen.

4. Kabelkanal nach Anspruch 1, bei dem wenigstens eines der beiden Lager und/oder das Gelenk durch Zonen mit Materialschwächung gegenüber benachbarten Abschnitten gebildet sind.

5. Kabelkanal nach Anspruch 3 aus Kunststoff.

6. Kabelkanal nach Anspruch 5, hergestellt als Spritzgußteil oder als Extrusionsteil.

7. Kabelkanal nach Anspruch 1, bei dem mehrere Kanalteile nebeneinander angeordnet sind.
